# EUROPÄISCHE PATENTSCHRIFT

(11) **EP 0 679 123 B1**
(45) Veröffentlichungstag und Bekanntmachung des Hinweises auf die Patenterteilung: **07.06.2000**
(21) Anmeldenummer: 95900682.6
(22) Anmeldetag: 09.11.1994
(51) Int. Cl.: B32B 5/18, C09J 7/02

(54) **VERBUNDPROFIL**
COMPOSITE SECTION
PROFILE COMPOSITE

(30) Priorität: 12.11.1993 DE 9317356 U
(43) Veröffentlichungstag der Anmeldung: 02.11.1995
(73) Patentinhaber: METEOR GUMMIWERKE K.H. BÄDJE GMBH & CO., 31167 Bockenem (DE)
(72) Erfinder: WARNECKE, Hans-Jürgen, D-38642 Goslar (DE)
(74) Vertreter: Kosel, Peter, Dipl.-Ing.
(86) Internationale Anmeldenummer: EP9403678
(87) Internationale Veröffentlichungsnummer: WO9513184

(56) Entgegenhaltungen:
- EP-A- 0 320 676
- EP-A- 0 381 349
- WO-A-94/14912
- US-A- 4 304 813
- DATABASE WPI Week 8905, Derwent Publications Ltd., London, GB; AN 89-036121 & JP,A,63 309 575 (NITTO ELECTRIC IND KK) 16. Dezember 1988

## Beschreibung

Die Erfindung betrifft ein Verbundprofil nach dem Oberbegriff des Anspruchs 1.

Ein bekanntes Verbundprofil (EP 320 676 A2, Ausführungsbeispiel 3) weist eine 1 mm dicke PVC-Schaumstoffschicht auf, die einseitig mittels eines Extruders mit 20 g/qm Polyethylen befilmt ist. Die andere Schaumstoffseite wird mit einem Polyacrylathaftkleber beschichtet und mit einem siliconisierten Schutzpapier abgedeckt. Dieses Montageklebeband wird unter Druck und Wärme mit seinem Polyethylenfilm auf ein EPDM-Profil laminiert. Nach dem Abziehen des Schutzpapiers kann das selbstklebend ausgerüstete EPDM-Profil z.B. auf einen lackierten Kraftfahrzeugtürrahmen aufgeklebt werden.

Es ist auch ein Klebeband mit einer Kunststoffolie bekannt, die beidseitig mit einem Acrylathaftkleber beschichtet ist. Eine den Kleberschichten ist mit einem Liner abgedeckt.

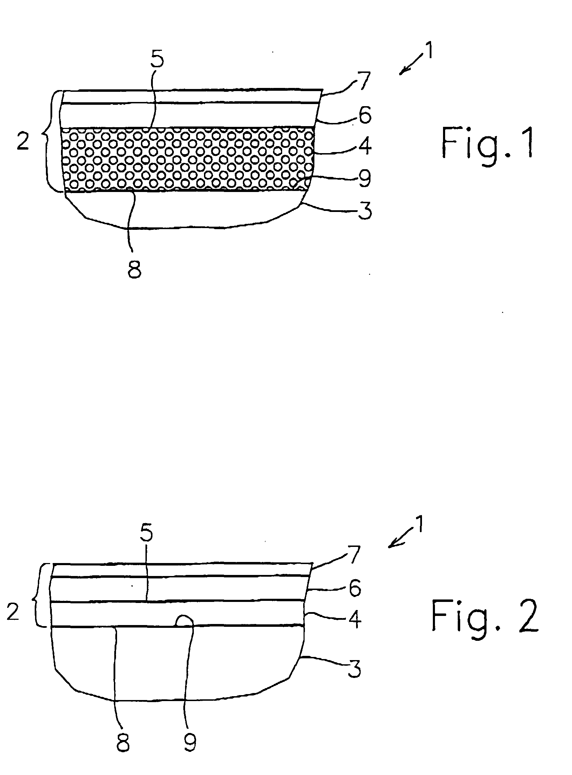

Aus der DE 36 21 885 A1 ist es an sich bekannt, einen beispielsweise aus EPDM bestehenden, dem Prallschutz oder der Dekoration von Kraftfahrzeugen dienenden Formkörper über einen Klebstoff (Fig. 1 und 3) oder ein Versiegelungsmittel und einen Klebstoff (Fig. 2) mit einer Schaumstoffschicht zu verbinden. Als Versiegelungsmittel sind solche auf Lösungsmittelbasis vorgesehen. Die Schaumstoffschicht wird ihrerseits über eine druckempfindliche Klebstoffschicht mit einem lackierten Karosserieblech verbunden.

Aus der FR 2 643 910 A1 ist ein Klebeband an sich bekannt, das aus einem beidseitig klebenden ersten Klebeband und mehreren, jeweils einseitig klebenden zweiten Klebebändern aufgeschichtet ist. Die äußere Klebeschicht des ersten Klebebands kann entweder an dem Rand einer Folie befestigt oder mit einem Schutzstreifen abgedeckt sein. Die Klebeschicht des letzten zweiten Klebebands kann an einen Träger, z.B. eine Wand, geheftet werden.

Der Erfindung liegt die Aufgabe zugrunde, eine feste Verbindung des Klebebands mit einem Dichtungsprofil zu einem Verbundprofil kostengünstig zu erzielen.

Diese Aufgabe ist durch die Merkmale des Anspruchs 1 gelöst. Die Kleberschicht kann z.B. ein Acrylatkleber mit reinem oder modifiziertem Acrylat sein. Nach dem Abziehen des Liners ist ein solcher Kleber in der Lage, eine gute Haftung zu einer gegenüberliegenden Montagefläche, z.B. einem lackierten Karosserieblech, herzustellen. Durch die Verschweißung ergibt sich eine gute Vernetzung der Trägerschicht mit dem Dichtungsprofil. Die Verbindung geschieht vorzugsweise unter Druckeinwirkung, z.B. durch Rollen. Ein weiterer Vorteil ist der, daß mit einem so ausgebildeten Klebeband deutlich größere Klebebandlängen als bisher auf Rollen aufgewickelt und dem Anwender zur Verfügung gestellt werden können. Dies ist vor allem darauf zurückzuführen, daß das vorgeschlagene Klebeband deutlich weniger kantenklebrig ist als die bekannten Klebebänder. Darüber hinaus läßt sich das Verbundprofil preisgünstiger herstellen als bekannte Verbundprofile, weil auf eine zusätzliche Kleberschicht zwischen der Trägerschicht und dem Dichtungsprofil verzichtet werden kann. Mit dem Schaumstoff läßt sich auch an der gegenüberliegenden zweiten Fläche der Trägerschicht eine in jedem Fall ausreichende Haftung zu der Gegenfläche des Dichtungsprofils erzielen.

Die Merkmale des Anspruchs 2 oder 3 führen zu fertigungs- und anwendungstechnisch besonders günstigen Trägerschichten.

Die vorerwähnte Aufgabe ist auch durch die Merkmale des Anspruchs 4 gelöst. Die Kunststoffolie kann z.B. aus Polyester (PES), Polypropylen (PP), Polyethylen (PE) oder Polyamid (PA) bestehen. Diese kostengünstigere Ausführungsform mit einer Kunststoffolie als Trägerschicht wird man wählen, wenn auf die spezifischen Eigenschaften des Schaumstoffs verzichtet werden kann. Auch hier ergibt sich über die Verschweißung eine ausgezeichnete Bindung der Kunststoffolie an das Dichtungsprofil.

Dichtungsprofile gemäß Anspruch 5 finden Einsatz z.B. im Karosseriebau für die Tür-, Kofferraum- und Leuchtenabdichtung, im Bauwesen für Tür- und Fensterdichtungen und als Dichtungen für Schaltschränke.

Die Ausgestaltung der Gegenfläche gemäß Anspruch 6 kann bei Bedarf die Haftung des Dichtungsprofils an der Trägerschicht vereinfachen und verbessern. Die Vorbereitung der Gegenfläche kann z.B. durch einen Primer oder durch mechanisches Aufrauhen oder durch Coronaentladung oder mittels eines Brennschuhs (Oxidation der Gegenfläche) geschehen.

Weitere Merkmale und Vorteile der Erfindung ergeben sich aus der nachfolgenden Beschreibung von Ausführungsbeispielen anhand der Zeichnungen. Es zeigen:
Fig. 1 und 2 jeweils schematisch den Schichtaufbau unterschiedlicher Ausführungsformen eines Verbundprofils aus einem Klebeband und einem Dichtungsprofil.

Fig. 1 zeigt ein Verbundprofil 1 aus einem Klebeband 2 und einem Dichtungsprofil 3 aus EPDM.

Das Klebeband 2 weist eine Trögerschicht 4 aus einem Schaumstoff, z.B. einem PU-Schaum, auf. Auf eine erste Fläche 5 der Trägerschicht 4 ist als Kleberschicht 6 ein Acrylatkleber aufgetragen, der durch einen Liner 7 abgedeckt ist.

Eine zweite Fläche 8 der Trägerschicht 4 gegenüber der ersten Fläche 5 ist mit einer Gegenfläche 9 des Dichtungsprofils 3 verschweißt. Dazu ist vorzugsweise die zweite Fläche 8 durch Wärmeeinwirkung von z.B. 150° C bis 250° C angeschmolzen und mit der zuvor ebenfalls erwärmten Gegenfläche 9 unter Druckanwendung rechtwinklig zu den Flächen 8, 9 verschweißt.

In beiden Zeichnungsfiguren sind gleiche Teile mit gleichen Bezugszahlen versehen.

Bei dem Ausführungsbeispiel nach Fig. 2 ist als Trägerschicht 4 eine Kunststoffolie, z.B. aus PP, verwendet. In Fig. 2 sind die zweite Fläche 8 der Trägerschicht 4 und die Gegenfläche 9 des Dichtungsprofils 3 miteinander verschweißt. Dies kann z.B. dadurch geschehen, daß die zweite Fläche 8 durch Wärmeeinwirkung angeschmolzen und dann unter Druckeinwirkung mit den zuvor ebenfalls erwärmten Gegenfläche 9 verschmolzen wird.

## Patentansprüche

1. Verbundprofil (1), mit einem Dichtungsprofil (3) und einem Klebeband (2),
wobei das Klebeband (2) eine flexible Trägerschicht (4) aufweist,
wobei auf einer ersten Fläche (5) der Trägerschicht (4) eine durch einen abziehbaren Liner (7) abgedeckte Kleberschicht (6) angeordnet ist,
wobei die Trägerschicht (4) aus einem Schaumstoff besteht,
und wobei eine der ersten Fläche (5) gegenüberliegende zweite Fläche (8) der Trägerschicht (4) mit einer Gegenfläche (9) des Dichtungsprofils (3) zur Bildung des Verbundprofils (1) verbunden ist,
dadurch gekennzeichnet, daß die Trägerschicht (4) zumindest an ihrer zweiten Fläche (8) durch Wärmeeinwirkung von 100 °C bis 400 °C. vorzugsweise 150 °C bis 250 °C, angeschmolzen und mit der ebenfalls erwärmten Gegenfläche (9) des Dichtungsprofils (3) verschweißt ist.

2. Verbundprofil nach Anspruch 1, dadurch gekennzeichnet, daß der Schaumstoff ein Polyurethan (PU)- oder Polyethylen (PE)- oder Acetatschaum ist.

3. Verbundprofil nach 1 oder 2, dadurch gekennzeichnet, daß die Dicke der Trägerschicht (4) 0,2 mm bis 2.0 mm, vorzugsweise 0,5 mm bis 1,2 mm, beträgt.

4. Verbundprofil (1) mit einem Dichtungsprofil (3) und einem Klebeband (2),
wobei das Klebeband (2) eine als Kunststoffolie ausgebildete flexible Trägerschicht (4) aufweist,
und wobei auf einer ersten Fläche (5) der Trägerschicht (4) eine durch einen abziehbaren Liner (7) abgedeckte Kleberschicht (6) angeordnet ist,
dadurch gekennzeichnet, daß die Trägerschicht (4) eine ihrer ersten Fläche (5) gegenüberliegende zweite Fläche (8) aufweist,
und daß die Trägerschicht (4) zumindest an ihrer zweiten Fläche (8) durch Wärmeeinwirkung von 100° C bis 400° C, vorzugsweise 150° bis 250° C, angeschmolzen und mit einer ebenfalls erwärmten Gegenfläche (9) des Dichtungsprofils (3) zur Bildung eines Verbundkörpers (1) verschweißt ist.

5. Verbundprofil nach einem der Ansprüche 1 bis 4, dadurch gekennzeichnet, daß das Dichtungsprofil (3) aus oder aus einer Mischung mit einem Ethylen-Propylen-Dien-Terpolymer (EPDM), insbesondere aus Weich- und/oder Moosgummi, besteht.

6. Verbundprofil nach einem der Ansprüche 1 bis 5, dadurch gekennzeichnet, daß die Gegenfläche (9) des Dichtungsprofils (3) in ihrer Oberflächenstruktur für die Verbindung mit dem Klebeband (2) vorbereitet ist.

## Claims

1. Composite profile (1) with sealing profile (3) and an adhesive tape (2),
wherein the adhesive tape (2) has a flexible supporting layer (4),
wherein an adhesive layer (6), covered with a removable liner (7), is applied to a first surface (5) of the supporting layer (4),
wherein the supporting layer (4) is made of foam,
and wherein a second surface (8) of the supporting layer (4) opposite the first surface (5) is bonded with a counter surface (9) of the sealing profile (3) to form a composite profile (1),
characterised in that at least the second surface (8) of the supporting layer (4) is melted via the application of heat at 100 ° C to 400 ° C and preferably 150 ° C to 250 ° C and welded with the pre-heated counter surface (9) of the sealing profile (3).

2. Composite profile in accordance with claim 1, characterised in that the foam used is polyurethane (PU) or polythene (PE) or acetate foam.

3. Composite profile in accordance with claim 1 or 2 characterised in that the thickness of the supporting layer (4) is 0.2 mm to 2.0 mm, preferably 0.5 mm to 1.2 mm.

4. Composite profile (1) with sealing profile (3) and an adhesive tape (2),
wherein the adhesive tape (2) has a flexible supporting layer (4) in the form of a synthetic film,
and wherein an adhesive layer (6), covered with a removable liner (7), is applied to a first surface (5) of the supporting layer (4),
characterised in that the supporting layer (4) has a second surface (8) opposite to its first surface (5) ,
and that at least the second surface (8) of the supporting layer (4) is melted via the application of heat at 100 ° C to 400 ° C and preferably 150 ° C to 250 ° C and is bonded with the pre-heated counter surface (9) of the sealing profile (3) to form a composite body (1).

5. Composite profile in accordance with one of claims 1 to 4, characterised in that the sealing profile (3) is made of or of a mixture incorporating ethylene propylene diene terpolymer (EPDM), particularly of soft and/or foam rubber.

6. Composite profile in accordance with one of the claims 1 to 5 characterised in that the upper surface structure of the counter surface (9) of the sealing profile (3) is prepared for bonding with the adhesive tape (2).

## Revendications

1. Profilé composite (1) comprenant un joint d'étanchéité profilé (3) et une bande adhésive (2),
dans lequel la bande adhésive (2) présente une couche de support souple (4),
dans lequel une couche de colle (6) recouverte d'un liner de séparation pelable (7) est disposée sur une première face (5) de la couche de support (4),
dans lequel la couche de support (4) est formée d'un produit alvéolaire,
et dans lèquel une seconde face (8) de la couche de support (4), située à l'opposé de la première face (5), est reliée à une contre-surface (9) du joint d'étanchéité profilé (3) pour former le profilé composite (1),
caractérisé en ce que la couche de support (4) est fon due au moins sur sa seconde face (8) sous l'effet d'une température de 100°C à 400°C, de préférence de 150°C à 250°C, et, le cas échéant, est soudée avec la face antago niste (9), également chauffée, du joint d'étanchéité profi lé (3).

2. Profilé composite selon la revendication 1, caractérisé en ce que le produit alvéolaire est une mousse de polyuréthane (PU) ou de polyéthylène (PE) ou d'acétate.

3. Profilé composite selon la revendication 1 ou 2, caractérisé en ce que l'épaisseur de la couche de support (4) est de 0,2 mm à 2,0 mm, de préférence de 0, 5 mm à 1, 2 mm.

4. Profilé composite (1) comprenant un joint d'étanchéité profilé (3) et une bande adhésive (2),
dans lequel la bande adhésive (2) présente une couche de support souple (4) sous la forme d'un film de matière plastique,
et dans lequel une couche de colle (6) recouverte d'un liner de séparation pelable (7) est disposée sur une première face (5) de la couche de support (4),
caractérisé en ce que la couche de support (4) présente une seconde face (8) située à l'opposé de sa première face (5), et en ce que la couche de support (4) est fondue au moins sur sa seconde face (8) sous l'effet d'une température de 100°C à 400°C, de préférence de 150°C à 250°C, et,le cas échéant, est soudée avec une contre-surface (9), également chauffée, du joint d'étanchéité profilé (3) pour la formation d'un corps composite (1).

5. Profilé composite selon l'une des revendications 1 à 4, caractérisé en ce que le joint d'étanchéité profilé (3) est forme d'un ou d'un mélange un comprenant un terpolymère éthylènepropylène-diène (EPDM), en particulier de caoutchouc mou et/ou de caoutchouc mousse.

6. Profilé composite selon l'une des revendications 1 à 5, caractérisé en ce que la contre-surface (9) du joint d'étanchéité profilé (3) est prétraitée dans sa structure superficielle pour l'assemblage avec la bande adhésive (2).
